# EUROPEAN PATENT APPLICATION

(11) **EP 4 604 303 A1**
(43) Date of publication of application: **20.08.2025**
(21) Application number: 24854304.3
(22) Date of filing: 03.07.2024
(51) Int. Cl.: H01M 50/502, H01M 50/521, H01M 50/526, H01M 50/519, H01M 50/211

(54) **BUSBAR ASSEMBLY AND BATTERY PACK INCLUDING SAME**

(30) Priority: 11.08.2023 KR 20230105717
(71) Applicant: LG Energy Solution, Ltd., Seoul 07335 (KR)
(72) Inventor: YUN, Sunwoo, Daejeon 34122 (KR)
(74) Representative: Plasseraud IP
(86) International application number: PCT/KR2024/009341
(87) International publication number: WO 2025/037751

(57) **Abstract**

A busbar assembly according to one embodiment of the present disclosure comprises: a busbar that is connected to battery modules inside the battery pack to guide an electrical connection of the battery modules, a first insulating layer that surrounds an outer peripheral surface of the busbar and has grooves formed at both ends, a second insulating layer that surrounds the first insulating layer, and a cap that including a main body that surrounds both ends of the busbar and a fixing part that is inserted into the groove.

## Description

### [TECHNICAL FIELD]

### Cross Citation with Related Application(s)

This application claims priority from and the benefit of Korean Patent Application No. 10-2023-0105717 filed on August 11, 2023 with the Korean Intellectual Property Office, the disclosure of which is incorporated herein by reference in its entirety.

The present disclosure relates to a busbar assembly and a battery pack including the same, and more particularly, to a busbar assembly having an improved insulation stability, and a battery pack including the same.

### [BACKGROUND]

In modern society, as portable devices such as a mobile phone, a notebook computer, a camcorder and a digital camera have been daily used, technologies of a field related to the mobile devices has been actively developed. In addition, as a secondary battery capable of being charged and discharged is used as a power source for an electric vehicle(EV), a hybrid electric vehicle(HEV), a plug-in hybrid electric vehicle(P-HEV) and the like as a method for solving air pollution and the like caused by existing gasoline vehicles using fossil fuel, a necessity for the development of the secondary battery is increasing.

Currently commercialized secondary batteries include a nickel cadmium battery, a nickel hydrogen battery, a nickel zinc battery, a lithium secondary battery, and the like, and among them, the lithium secondary battery has come into the spotlight because it has advantages, for example, hardly exhibiting memory effects compared to nickel-based secondary batteries and thus being freely charged and discharged, and having very low self-discharge rate and high energy density.

A lithium secondary battery generally uses lithium-based oxide and a carbon material as a positive electrode active material and a negative electrode active material respectively. The lithium secondary battery includes an electrode assembly in which a positive electrode plate and a negative electrode plate respectively coated with the positive electrode active material and the negative electrode active material are arranged with a separator interposed between them, and a battery case which hermetically houses the electrode assembly together with an electrolyte.

Generally, the lithium secondary battery may be classified based on the shape of the exterior material into a can type secondary battery in which the electrode assembly is mounted in a metal can, and a pouch type secondary battery in which the electrode assembly is mounted in a pouch made of an aluminum laminate sheet.

In the case of a secondary battery used for small-sized devices, two to three battery cells are arranged, but in the case of a secondary battery used for a medium- or large-sized device such as automobile, a battery module in which a large number of battery cells are electrically connected is used. In such a battery module, a large number of battery cells are connected to each other in series or parallel to form a cell assembly, thereby improving capacity and output. Further, one or more battery modules can be mounted together with various control and protection systems such as a battery management system(BMS), a battery disconnect unit(BDU), and a cooling system to form a battery pack.

In the battery pack configured to gather a plurality of battery modules, heat generated from multiple battery cells can be added up in a narrow space, so that the temperature can rise more quickly and excessively. In other words, battery modules in which a plurality of battery cells are stacked and a battery pack equipped with these battery modules can obtain high output, but when the heat dissipation of battery cells is not properly performed or thermal runaway phenomenon occurs in a battery cell, the possibility of explosion or ignition is high.

Meanwhile, a busbar connected to a battery module is provided inside the battery pack.

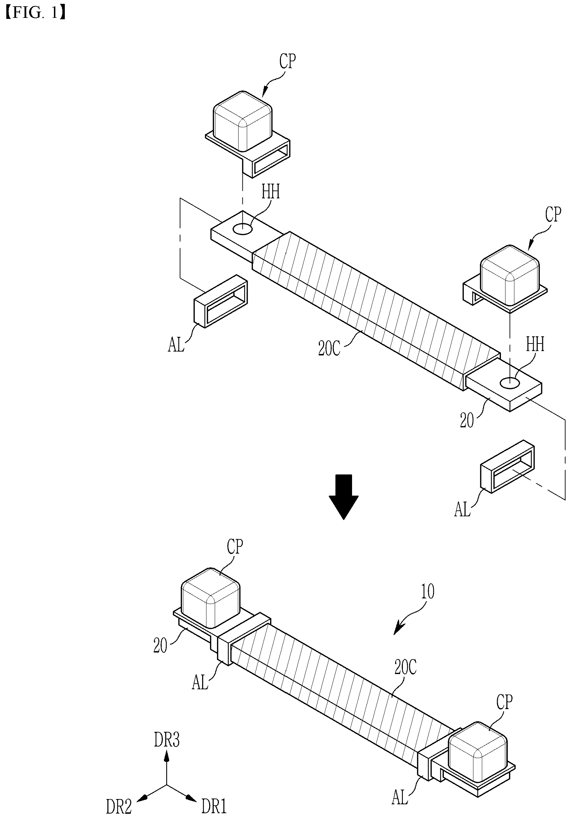

FIG. 1 shows an exploded perspective view and a combined perspective view of a conventional busbar assembly.

Referring to FIG. 1, a conventional busbar assembly 10 includes a busbar 20, a covering 20C that surrounds the busbar 20, a cap CP, and a tape AL for fixing the cap CP. The busbar 20 is a rod-shaped metal member extending along the longitudinal direction. Both ends of the busbar 20 may be formed with a through hole(HH) for connecting with a terminal busbar of a battery module. Such a busbar 20 is configured to be in charge of HV (high voltage) connection in a battery pack. The HV connection means a connection that serves as a power source for supplying electric power, and the busbar 20 is configured to guide an electrical connection of the battery modules, and generally includes a metal material having excellent electrical conductivity. As an example, the busbar 20 may include a copper(Cu) material.

The covering 20C may surround the busbar 20. The covering 20C can include a material that is electrically insulating, and as an example, it may include a material such as silicone or epoxy. Since the covering 20C surrounds the busbar 20 through which a high current flows, it blocks the busbar 20 from coming into contact with other electrical components or conductive members other than the terminal busbar of the battery module and causing a short circuit.

A fastening member may be inserted into the through hole(HH) of the busbar 20 to connect the busbar 20 to the terminal busbar of the battery module. A cap(CP) is attached to both ends of the busbar 20 for insulation. The cap(CP) may be, for example, a rubber cap. The cap(CP) may be attached to the covering(20C) using a tape(AL).

However, when a flame occurs inside the battery pack, the flame has a very high temperature of about 1000°C, the busbar 20 may be exposed while the covering 20C covering the busbar 20 melts, or the cap CP and tape AL melt. If the exposed busbar 20 comes into contact with another conductive member to cause a short circuit, the internal flame may further spread, and this flame may spread to the outside of the battery pack. Ultimately, this may lead to an explosion of a battery pack or a vehicle equipped with the battery pack.

Therefore, there is a need to develop techniques for a busbar assembly that can maintain electrical insulation properties even when a flame occurs inside the battery pack.

### [DETAILED DESCRIPTION OF THE INVENTION]

### [Technical Problem]

It is an object of the present disclosure to provide a busbar assembly that can maintain excellent electrical insulation properties even when a flame occurs inside the battery pack. and a battery pack including the same.

However, the problem to be solved by embodiments of the present disclosure is not limited to the above-described problems, and can be variously expanded within the scope of the technical idea included in the present disclosure.

### [Technical Solution]

A busbar assembly according to the present disclosure comprises: a busbar that is connected to battery modules inside the battery pack to guide an electrical connection of the battery modules; a first insulating layer that surrounds an outer peripheral surface of the busbar and has grooves formed at both ends; a second insulating layer that surrounds the first insulating layer; and a cap that including a main body that surrounds both ends of the busbar and a fixing part that is inserted into the groove.

In one embodiment, a thickness of the fixing part may be larger than a thickness of the first insulating layer, a lower part of the fixing part may be coupled with the first insulating layer, and the second insulating layer may be in contact with an upper part of the fixing part.

In one embodiment, the second insulating layer may be disposed between the fixing parts disposed at both ends of the busbar.

In one embodiment, the fixing part and the first insulating layer may be positioned in the same layers, and the second insulating layer may be disposed on the fixing part and the first insulating layer.

In one embodiment, a tape may be disposed between the second insulating layer and the fixing part.

In one embodiment, the second insulating layer may have a tube shape including a glass fiber.

In one embodiment, an outer surface of the second insulating layer may be coated with silicone.

In one embodiment, the second insulating layer may not include an adhesive material.

In one embodiment, the fixing part may comprise a plurality of protrusion parts spaced apart from each another, and the groove may comprise a plurality of spaced apart recessed parts into which the protrusion parts can be inserted.

In one embodiment, the fixing part may comprise a shape of an extended block, and the groove may have a groove into which the block is inserted.

In one embodiment, the first insulating layer may comprise a flame-resistant silicone.

A battery pack according to the present disclosure comprise: at least one busbar assembly; battery modules; a BDU (battery disconnect unit) module for controlling electrical connection of the battery modules; and a BMS (battery management system) module for monitoring and controlling operation of the battery modules, wherein the at least one busbar assembly electrically connects at least one of: between the battery modules, between the battery module and the BDU module, between the battery module and the BMS module, and between the BDU module and the BMS module.

### [Advantageous Effects]

A busbar assembly according to the present disclosure minimizes the use of adhesives for coupling a cap and an insulating layer and thus can maintain excellent insulation property and fire resistance even when exposed to flame.

Effects of the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 shows an exploded perspective view and a combined perspective view of a conventional busbar assembly.
FIG. 2 is a plan view of a battery pack according to one embodiment.
FIG. 3 is a perspective view of one of the battery modules included in the battery pack according to FIG. 2.
FIG. 4 is a partial perspective view showing a state in which a module frame and an end plate are removed from the battery module according to FIG. 3.
FIG. 5 is a plan view of a busbar provided with an insulating layer according to one embodiment.
FIG. 6 is a plan view of a cap according to one embodiment.
FIG. 7 is a plan view of a busbar provided with a cap and an insulating layer according to one embodiment.
FIG. 8 is a plan view of a cap according to one embodiment.
FIG. 9 is a plan view of a busbar provided with a cap and an insulating layer according to one embodiment.
FIG. 10 is a plan view showing one step of a method for manufacturing a busbar assembly according to one embodiment.
FIG. 11 is a plan view showing one step of a method for manufacturing a busbar assembly according to one embodiment.
FIG. 12 is a plan view showing one step of a method for manufacturing a busbar assembly according to one embodiment.
FIG. 13 is a plan view showing one step of a method for manufacturing a busbar assembly according to one embodiment.
FIG. 14 is a cross-sectional view of a busbar assembly according to one embodiment.
FIG. 15 is a cross-sectional view of a busbar assembly according to one embodiment.
FIG. 16 is a cross-sectional view of a busbar assembly according to one embodiment.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

A description of portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Further, throughout the description, a first direction(DR1), a second direction(DR2), and a third direction(DR3) are used as relative concepts. The first direction(DR1), the second direction(DR2), and the third direction(DR3) may intersect perpendicular to each other. Throughout the description, the concepts of upper and lower are described as being distinguished along the third direction(DR3). Also, specifically, an upper direction or an upper side direction means the third direction(DR3). A lower direction or a lower side direction means a direction opposite to the third direction(DR3). throughout the description, the term "thickness" means the length measured in the third direction(DR3).

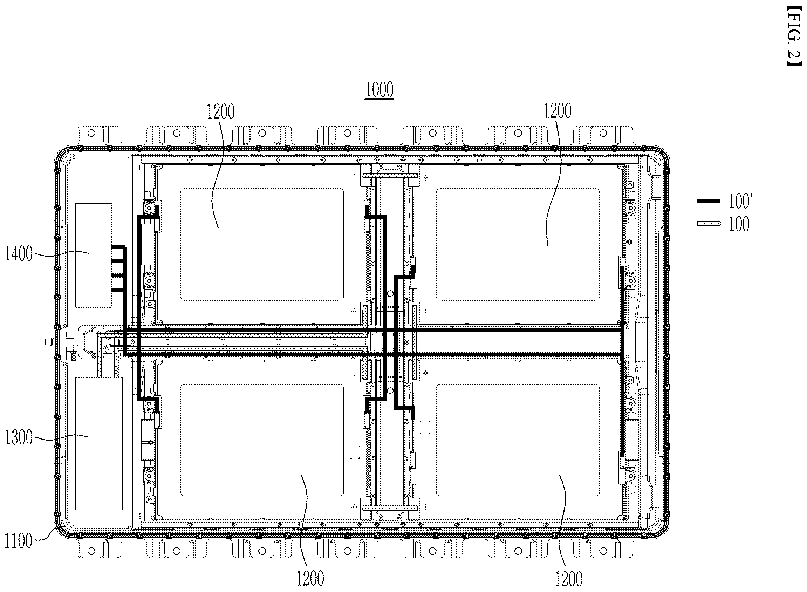

FIG. 2 is a plan view of a battery pack according to one embodiment.

Referring to FIG. 2, a battery pack 1000 according to an embodiment of the present disclosure includes: a busbar assembly 100, a pack frame 1100, battery modules 1200, a BDU(battery disconnect unit) module 1300 for controlling an electrical connection of the battery modules 1200; and a BMS(battery management system) module 1400 for monitoring and controlling an operation of the battery modules 1200. At least one busbar assembly 100 according to this embodiment electrically connects at least one of: between the battery modules 1200, between the battery module 1200 and the BDU module 1300, between the battery module 1200 and the BMS module 1400, or between the BDU module 1300 and the BMS module 1400. Specifically, a plurality of battery modules 1200 can be housed in the pack frame 1100, and an electrical connection between the battery modules 1200 or an electrical connection between the battery modules 1200 and the BDU module 1300 can be achieved by the busbar assembly 100. That is, the busbar assembly 100 according to this embodiment can be in charge of an HV(High voltage) connection. Here, the HV connection is a connection that serves as a power source for supplying electric power that requires high voltage, and means a connection between battery cells or a connection between battery modules.

Meanwhile, the BDU module 1300 is a member for controlling an electrical connection between the battery modules 1200, and can interrupt the electric power between a power conversion device and the battery module 1200. When a condition occurs in which the current exceeds a set range, the BDU module 1300 can interrupt the power of the battery pack 1000, thereby ensuring the safety of the battery pack 1000.

Meanwhile, the LV connection member 100' according to the present embodiment can be in charge of an electrical connection between the battery module 1200 and the BMS module 1400. The electrical connection herein is an LV(low voltage) connection, which means a sensing connection for detecting and controlling the voltage and temperature of the battery module 1200. Specifically, sensors and the like are arranged inside the battery module 1200, and real-time temperature information or voltage information of the battery module 1200 is transmitted to the BMS module 1400 via the LV connection member 100'. It is possible to monitor and control the real-time operating status of the battery module 1200 via the BMS module 1400. Although not specifically shown in the figure, an HV current sensor may be integrated into the BMS module 1400. In this case, the busbar assembly according to the present embodiment may be in charge of an electrical connection between the battery module 1200 and the BMS module 1400 or between the BDU module 1300 and the BMS module 1400.

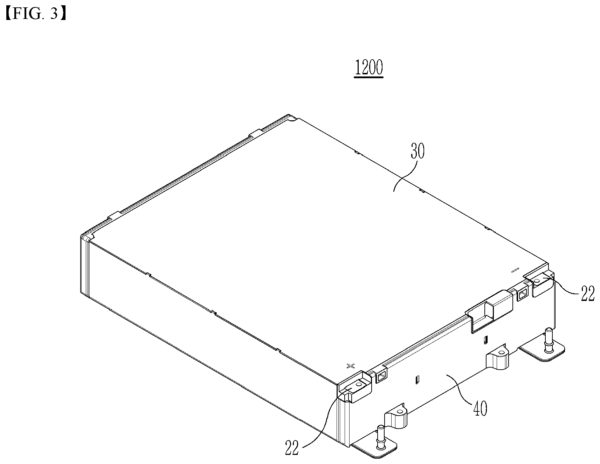

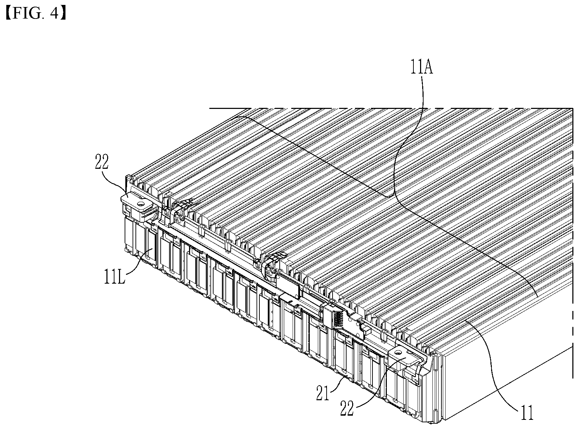

A battery module 1200 according to the present embodiment will be described with reference to FIGS. 3 and 4. However, the battery module 1200 described below is an exemplary structure of a battery module including a plurality of battery cells 11, and various types of battery modules including a plurality of battery cells can be applied.

FIG. 3 is a perspective view of one of the battery modules included in the battery pack according to FIG. 2.

FIG. 4 is a partial perspective view showing a state in which a module frame and an end plate are removed from the battery module according to FIG. 3.

Referring to FIGS. 3 and 4 together, the battery module 1200 according to the present embodiment may include a battery cell stack 11A in which a plurality of battery cells 11 are stacked. The battery cell stack 11A is illustrated in FIG. 4. This battery cell stack 11A may be housed in the module frame 30 and the end plate 40.

The battery cell 11 may be a pouch-type battery cell. The pouch-type battery cell may be formed by housing an electrode assembly in a pouch case made of a laminate sheet including a resin layer and a metal layer, and then fusing the outer peripheral part of the pouch case. However, the battery cell 11 of the present disclosure is not limited to a pouch-type battery cell.

In one embodiment, the battery cells 11 may be formed in a rectangular sheet structure. The electrode lead 11L connected to the electrode assembly protrudes to an outside of the pouch case, wherein the electrode leads 11L of each battery cell 11 may be electrically connected to each other via the lead busbar 21. On the other hand, at least one electrode lead 11L may be connected to a terminal busbar 22. A portion of the terminal busbar 22 may be exposed to the outside of the battery module 1200 as shown in FIG. 3. Both the lead busbar 21 and the terminal busbar 22 may include a metal material with excellent electrical conductivity.

The busbar assembly 100 according to the present embodiment is electrically connected to such a terminal busbar 22, so that the above-mentioned HV connection can be achieved. That is, the battery module 1200 may be electrically connected to the other battery module 1200, the BDU module 1300, or the BMS module 1400 via the busbar assembly 100 connected to the terminal busbar 22.

Next, a busbar assembly according to one embodiment will be described in detail.

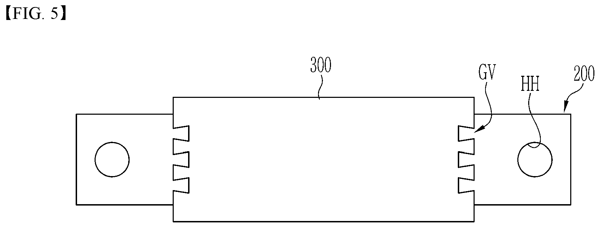

FIG. 5 is a plan view of a busbar provided with an insulating layer according to one embodiment.

Referring to FIG. 5, the busbar 200 guides electrical connections within the battery pack 1000 (see FIG. 2). The busbar 200 is configured to guide electrical connections, i.e., HV connections, of the battery module 1200 (see FIG. 2), and may include a metal material having excellent electrical conductivity. As an example, the busbar 200 may include a copper(Cu) material. The busbar 200 may have a rod shape extending in one direction. A through hole(HH) is defined at both ends of the busbar 200. A fastening member may be inserted into the through hole(HH) to connect the busbar 200 and the terminal busbar 22 (see FIG. 3) of the battery module 1200 (see FIG. 3).

The first insulating layer 300 is provided to surround the busbar 200. At this time, the through hole(HH) of the busbar 200 may be exposed from the first insulating layer 300 and electrically connected to the terminal busbar 22 (see FIG. 3) of the battery module 1200 (see FIG. 3).

The first insulating layer 300 may include a fire-resistant material. Specifically, the first insulating layer 300 may include a fire-resistant silicon. For example, the fire-resistant silicon may be molded on the outer peripheral surface of the busbar 200 to form the first insulating layer 300. The fire-resistant silicone may be ceramicized at high heat, unlike common silicone materials that are exposed to flame or burn at high temperatures. Therefore, when exposed to flame, the fire-resistant silicon can be ceramicized without burning, and can maintain insulation properties for the busbar 200. For example, the fire-resistant silicon can be ceramicized at a temperature of 500 degrees Celsius or higher and 1700 degrees Celsius or lower. However, the temperature range in which the fire-resistant silicon is ceramicized is not limited thereto. The fire-resistant silicone may include silicone polymer and silica. For example, the applied silicone polymer may be a polysiloxane-based compound having a vinyl group as a functional group, and may serve as a base material for a fire-resistant silicone material. For example, the applied silica may be a fumed silica, which is a reinforcing filler included in the silicone polymer. A high-purity silicone chloride(SiCl₄) compound can be produced using metallic silicone as a main raw material through reaction with hydrochloric acid and purification process, and this can be reacted with hydrogen and oxygen in a high temperature flame to obtain fumed silica. Further, the fire-resistant silicone may contain platinum Pt as a catalyst.

When the fire-resistant silicone is exposed to flame or high heat, silica(SiO₂) is crosslinked together with decomposition of the silicone polymer to form a ceramic material. The first insulating layer 300 of one embodiment including fire-resistant silicone does not burn or melt out, but can be ceramicized to maintain electrical insulation properties even if exposed to flame or placed in a high-temperature environment. Therefore, the first insulating layer 300 can insulate the busbar 200 even in the event of a flame or high temperatures, and can prevent the busbar 200 from coming into contact with other electrical equipment or conductive members and causing a short circuit.

A groove GV is formed at both ends of the first insulating layer 300. The groove GV has a shape that is recessed inward at both ends of the first insulating layer 300. In one embodiment, the groove GV may include a plurality of recessed parts spaced apart from each other. The groove GV has a structure for coupling with a cap 400 described later.

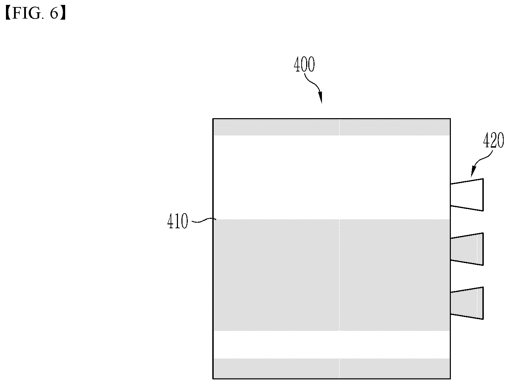

FIG. 6 is a plan view of a cap according to one embodiment.

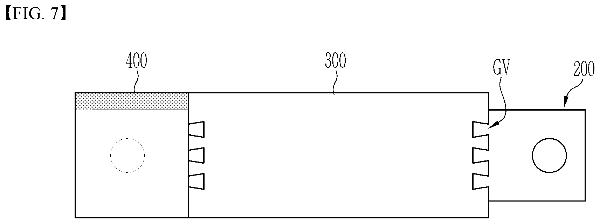

FIG. 7 is a plan view of a busbar provided with a cap and an insulating layer according to one embodiment.

Referring to FIGS. 6 and 7 together, the cap 400 covers both ends of the busbar 200, and particularly, covers the through hole(HH). Although not shown in the figure, the fastening member is inserted into the through hole(HH), and then the cap 400 covers both ends of the busbar 200 and the fastening member. Therefore, the cap 400 has a space for housing the fastening member. For the convenience of explanation, a process of connecting the busbar 200 to the terminal busbar 22 (see FIG. 3) by the fastening member is omitted in the figure . In addition, the cap 400 is coupled to the first insulating layer 300 to thereby prevent the busbar 200 from being exposed to the outside and prevent the busbar 200 from causing a short circuit.

The cap 400 may include a fire-resistant material. In one embodiment, the cap 400 may include any one of fire-resistant plastic, mica, and fire-resistant silicone. Thereby, the cap 400 may exhibit excellent fire resistance.

The fire-resistant plastic can serve to block the flame without causing holes or drips for a certain period of time when exposed to flame. Specifically, the fire-resistant plastic may form a carbonized layer in the flame to thereby protect the structure of the inside. The fire-resistant plastic may include at least one of a PPO (Polyphenylene Oxide)-based material, a PA (Polyamide)-based material, and a PBT (Polybutylene Terephthalate)-based material.

Mica has excellent fire resistance, heat resistance, high-temperature resistance and electrical insulation properties, and thus can act as a fire-resistant insulating layer without burning in flames or high temperatures.

For the fire-resistant silicone, the contents described above for the first insulating layer 300 can be applied similarly.

The cap 400 of the present disclosure includes a main body 410 and a fixing part 420. The main body 410 covers both ends of the busbar 200 as described above, and has a space for housing a fastening member. The fixing part 420 is inserted into the groove GV of the first insulating layer 300, so that the cap 400 is connected to the first insulating layer 300. The fixing part 420 may have a shape for being inserted into the groove GV, and the fixing part 420 of one embodiment may include a plurality of protrusion parts spaced apart from each other. The fixing part 420 may be provided integrally with the main body 410, but the embodiment is not limited thereto. The fixed part 420 including a plurality of protrusion parts may be coupled to the groove GV including a plurality of recessed parts, thereby strengthening a coupling force between the cap 400 and the first insulating layer 300.

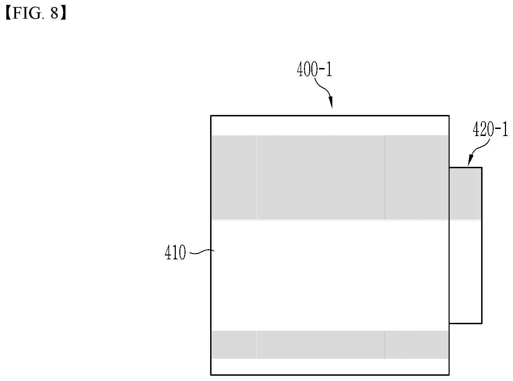

FIG. 8 is a plan view of a cap according to one embodiment.

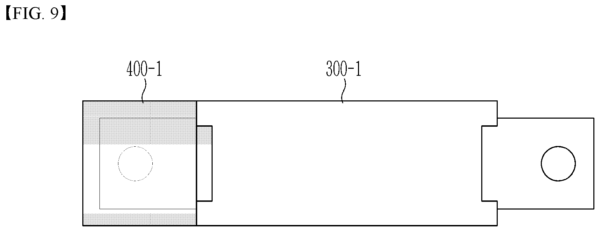

FIG. 9 is a plan view of a busbar provided with a cap and an insulating layer according to one embodiment.

Referring to FIGS. 8 and 9 together, the cap 400-1 includes a main body 410 and a fixing part 420-1, and the fixing part 420-1 of one embodiment may include one protrusion part extending in one direction. The first insulating layer 300-1 of one embodiment may include one recessed part extending in one direction in accordance with the shape of the fixing part 420-1 The fixing part 420-1 has a shape extending in one direction, which can increase the adhesive area between the tape subsequently provided on the cap 400-1 and the cap 400-1 and enhance the adhesive strength.

Next, a busbar assembly 100 having the structure of the first insulating layer 300 and the cap 400 shown in FIGS. 6 and 7 will be described as an example. However, the contents described below can be similarly applied to a busbar assembly having the structure of the first insulating layer 300-1 and the cap 400-1 shown in FIGS. 8 and 9.

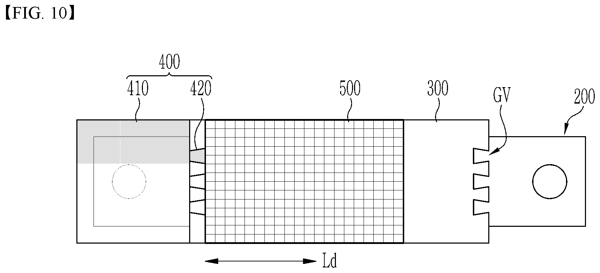

FIG. 10 is a plan view showing one step of a method for manufacturing a busbar assembly according to one embodiment.

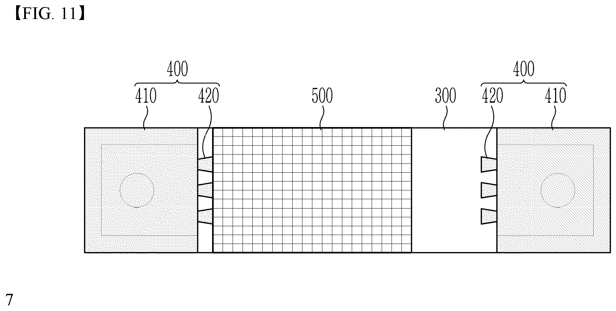

FIG. 11 is a plan view showing one step of a method for manufacturing a busbar assembly according to one embodiment.

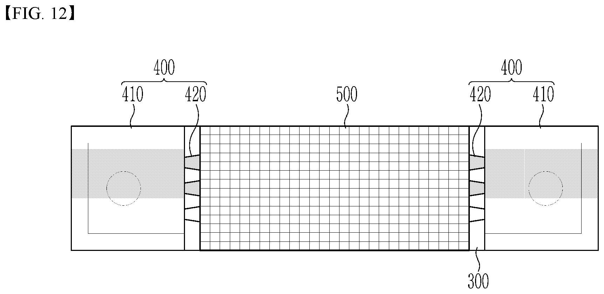

FIG. 12 is a plan view showing one step of a method for manufacturing a busbar assembly according to one embodiment.

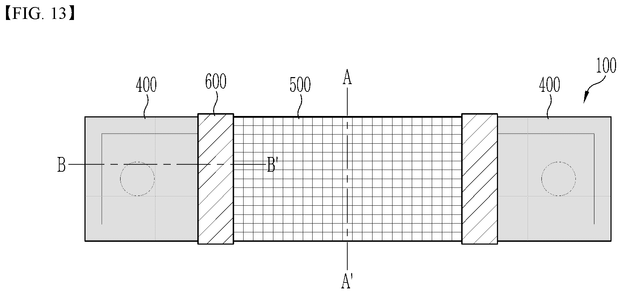

FIG. 13 is a plan view showing one step of a method for manufacturing a busbar assembly according to one embodiment.

An embodiment of a method for manufacturing a busbar assembly will be described with reference to FIGS. 10 to 13.

Referring to FIG. 10, the method for manufacturing a busbar assembly according to one embodiment includes a step of providing a second insulating layer 500 on a first insulating layer 300. The second insulating layer 500 is provided to surround the first insulating layer 300. Specifically, the cap 400 and the first insulating layer 300 are coupled at one end of the busbar 200, and then the second insulating layer 500 may be provided to surround the first insulating layer 300. The second insulating layer 500 may be provided in a tube shape. Specifically, the second insulating layer 500 provided in a tube shape may surround the first insulating layer 300 and insert in the longitudinal direction Ld of the busbar 200.

The second insulating layer 500 of the present disclosure may not include a separate adhesive material. The adhesive material may include, for example, at least one of an epoxy resin, a silicone resin, and an acrylic resin. Since the second insulating layer 500 does not include an adhesive material, it is possible to prevent harmful gases from being generated in the adhesive material when a flame occurs to thereby deteriorate the insulation of the busbar assembly.

Referring to FIG. 11, after providing the second insulating layer 500 on the first insulating layer 300, a step of providing a cap 400 on the other end of the first insulating layer 300 is performed. While the fixing part 420 is inserted into the groove GV formed on the other end of the first insulating layer 300, the cap 400 is fixed to the other end of the first insulating layer 300.

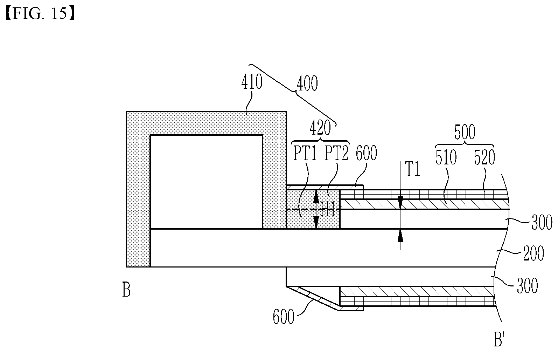

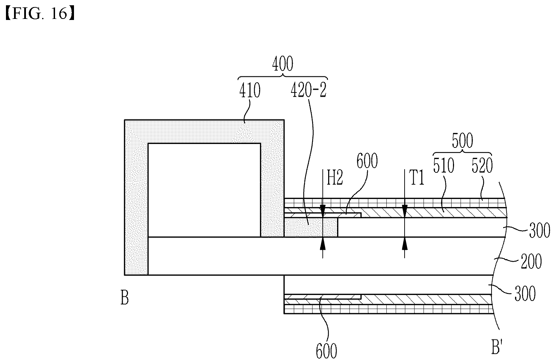

Referring to FIG. 12, after the cap 400 is coupled to both ends of the busbar 200 (see FIG. 10), the second insulating layer 500 spreads so as to be into contact with the fixing parts 420 of both ends. Instead of including no adhesive material, the second insulating layer 500 may be fixed by being interposed between the fixing parts 420 of the cap 400 at both ends. In this regard, a detailed description will be given later in FIG. 15 and FIG. 16.

Referring to FIG. 12 and FIG. 13 together, a tape 600 may be provided on the fixing part 420 to form a busbar assembly 100 of one embodiment. The tape 600 may be provided to cover a part of the fixing part 420 and the second insulating layer 500. The tape 600 may strengthen a coupling force between the cap 400 and the second insulating layer 500 and enhance the insulation properties of the busbar assembly 100. The tape 600 may include, for example, a glass fiber layer. The glass fiber layer may physically protect the internal structure, and, for example, the glass fiber layer may prevent the first insulating layer 300 from being directly exposed to external flame. When the first insulating layer 300 is ceramicized in a flame or high heat environment, the electrical insulation properties of the first insulating layer 300 can be maintained, but the strength is weakened and the layer may crack due to an external force. The glass fiber layer is provided to surround the first insulating layer 300, and may prevent the first insulating layer 300 from being broken by an external force. The busbar assembly 100 according to one embodiment includes a tape 600 including a glass fiber layer, which improves structural rigidity and can maintain excellent insulation performance even in the event of a fire. Meanwhile, the tape 600 includes an adhesive layer in addition to the glass fiber layer to provide adhesion properties. However, the tape 600 is used in small amounts, and the second insulating layer 500, which previously used the glass fiber tape, is replaced with a glass fiber tube that does not contain an adhesive material, so that the busbar assembly 100 can minimize the generation of harmful gases due to ignition of the adhesive material when exposed to a flame.

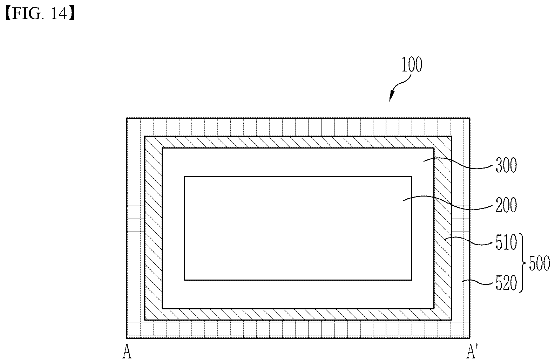

FIG. 14 is a cross-sectional view of a busbar assembly according to one embodiment.

FIG. 14 is a cross-sectional view of an embodiment in which the busbar assembly 100 shown in FIG. 13 is taken along the cutting line A-A'. Referring to FIG. 14, the first insulating layer 300 surrounds the outer peripheral surface of the busbar 200, and the second insulating layer 500 surrounds the outer peripheral surface of the first insulating layer 300.

In one embodiment, the second insulating layer 500 may include a glass fiber layer 510 and a coating layer 520. The glass fiber layer 510 is the above-mentioned glass fiber layer, and may be provided in a tube shape without including a separate adhesive layer. The coating layer 520 may be formed by coating the outer surface of the glass fiber layer 510 with silicone. The second insulating layer 500 may include the coating layer 520 to further improve fire resistance.

FIG. 15 is a cross-sectional view of a busbar assembly according to one embodiment.

FIG. 15 is a cross-sectional view of an embodiment in which the busbar assembly 100 shown in FIG. 13 is taken long the cutting line B-B'. Referring to FIG. 15, the thickness H1 of the fixing part 420 of the cap 400 may be larger than the thickness T1 of the first insulating layer 300. Therefore, when the fixing part 420 is coupled to the first insulating layer 300, the first insulating layer 300 may be in contact with the lower part PT1 of the fixing part 420, and the upper part PT2 of the fixing part 420, which is the remaining portion, may be exposed from the first insulating layer 300. The upper part PT2 of the fixing part 420 may serve as a hooking projection for fixing the second insulating layer 500. Specifically, the second insulating layer 500 is inserted and fixed between the upper parts PT2 of the fixing parts 420.

Referring to FIGS. 10 to 13 and FIG. 15 together, in FIGS. 10 and 11, the second insulating layer 500 is inserted so as to be in contact with the upper parts PT2 of the fixing parts 420 provided at one end. In FIG. 12, the second insulating layer 500 is inserted and fixed between the upper parts PT2 of the fixing parts 420 provided at both ends. Therefore, even if the second insulating layer 500 does not include a separate adhesive material, the second insulating layer 500 can be stably fixed without moving in the longitudinal direction of the busbar 200 by the fixing parts 420 included in the cap 400. Additionally, the tape 600 can once more couple the fixing part 420 and the second insulating layer 500, thereby improving the structural rigidity within the busbar assembly 100. The tape 600 may be omitted if necessary.

Meanwhile, the embodiment of the cap 400 is not limited thereto.

FIG. 16 is a cross-sectional view of a busbar assembly according to one embodiment.

FIG. 16 is a cross-sectional view of an embodiment in which the busbar assembly 100 shown in FIG. 13 is taken along the cutting line B-B'. Referring to FIG. 16, in the cap 400-2 of one embodiment, the thickness H2 of the fixing part 420-2 may be identical to the thickness T1 of the first insulating layer 300. Therefore, when the fixing part 420-2 is coupled to the first insulating layer 300, the first insulating layer 300 and the fixing portion 420-2 may be disposed in the same layers. In order to ensure the fixing force, a tape 600 may be provided to tape the cap 400-2 and the first insulating layer 300. Then, the second insulating layer 500 may be provided to surround the fixing part 420-2, the tape 600, and the first insulating layer 300. Specifically, the second insulating layer 500 having a tube shape may be inserted to surround the outer peripheral surface of the tape 600 and the first insulating layer 300. Thereby, the tape 600 is disposed between the second insulating layer 500 and the fixing part 420. In the embodiment of FIG. 16, the second insulating layer 500 is disposed and fixed between the main bodies 410 of the caps 400-2 provided at both ends. Meanwhile, the tape 600 may be omitted as necessary.

The busbar assembly of the present disclosure includes a cap containing a fixing part and a first insulating layer containing a groove into which the fixing part can be inserted, and thus can minimize the amount of the adhesive used for coupling the cap and the first insulating layer, and can prevent harmful gases from being generated in the adhesive at the time of a flame to thereby deteriorate the insulation properties. In addition, the second insulating layer disposed on the first insulating layer is provided in a tube shape that does not include an adhesive material, and the second insulating layer can be fixed by the caps at both ends without an adhesive material. Thereby, the busbar assembly of the present disclosure can maintain excellent insulation and fire resistance even when exposed to flame.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS (battery management system), a BDU(battery disconnect unit), and a cooling system to form a battery pack.

The battery module or the battery pack can be applied to various devices. Specifically, it can be applied to vehicle means such as an electric bike, an electric vehicle, and a hybrid electric vehicle, or an ESS(Energy Storage System) and may be applied to various devices capable of using a secondary battery, without being limited thereto.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

- 100:: busbar assembly
- 200:: busbar
- 300:: first insulating layer
- GV:: groove
- 400:: cap
- 410:: main body
- 420:: fixing part
- 500:: second insulating layer
- 600:: tape

## Claims

1. A busbar assembly comprising:
a busbar that is connected to battery modules inside a battery pack to guide an electrical connection of the battery modules;
a first insulating layer that surrounds an outer peripheral surface of the busbar and has grooves formed at both ends;
a second insulating layer that surrounds the first insulating layer; and
a cap that including a main body that covers both ends of the busbar and a fixing part that is inserted into the groove.

2. The busbar assembly according to claim 1, wherein:
a thickness of the fixing part is larger than a thickness of the first insulating layer,
a lower part of the fixing part is coupled with the first insulating layer, and
the second insulating layer is in contact with an upper part of the fixing part.

3. The busbar assembly according to claim 2, wherein:
the second insulating layer is disposed between the fixing parts disposed at both ends of the busbar.

4. The busbar assembly according to claim 1, wherein:
the thickness of the fixing part is identical to the thickness of the first insulating layer,
the fixing part and the first insulating layer are positioned in the same layers, and
the second insulating layer is disposed on the fixing part and the first insulating layer.

5. The busbar assembly according to claim 4, wherein:
a tape is disposed between the second insulating layer and the fixing part.

6. The busbar assembly according to claim 1, wherein:
the second insulating layer has a tube shape including a glass fiber.

7. The busbar assembly according to claim 6, wherein:
an outer surface of the second insulating layer is coated with silicone.

8. The busbar assembly according to claim 1, wherein:
the second insulating layer does not include an adhesive material.

9. The busbar assembly according to claim 1, wherein:
the fixing part comprises a plurality of protrusion parts spaced apart from each another, and
the groove comprises a plurality of spaced apart recessed parts into which the protrusion parts are inserted.

10. The busbar assembly according to claim 1, wherein:
the fixing part comprises a shape of an extended block, and
the groove has a recessed part into which the block is inserted.

11. The busbar assembly according to claim 1, wherein:
the first insulating layer comprises a flame-resistant silicone.

12. A battery pack comprising:
the busbar assembly according to claim 1;
battery modules;
a BDU (battery disconnect unit) module for controlling electrical connection of the battery modules; and
a BMS (battery management system) module for monitoring and controlling operation of the battery modules,
wherein the at least one busbar assembly electrically connects at least one of: between the battery modules, between the battery module and the BDU module, between the battery module and the BMS module, and between the BDU module and the BMS module.
